# EUROPÄISCHE PATENTANMELDUNG

(11) **EP 0 522 608 A1**
(43) Veröffentlichungstag der Anmeldung: **13.01.1993**
(21) Anmeldenummer: 92201342.0
(22) Anmeldetag: 12.05.1992
(51) Int. Cl.: G01G 23/46, G01G 23/37

(54) **Elektronische Waage mit einer Einrichtung zur Stillstandskontrolle**

(30) Priorität: 09.07.1991 CH 20341/91
(71) Anmelder: Mettler-Toledo AG, CH-8606 Greifensee (CH)
(72) Erfinder: Bachmann, Rudolf, CH-8614 Bertschikon (CH)

(57) **Zusammenfassung**

Die Einrichtung zur Stillstandskontrolle (ASD) ermittelt den Zeitpunkt, zu dem die Änderungen des Messwerts beim Einschwingen der Waage jeweils einen bestimmten von mehreren vorgegebenen Toleranzbereichen nicht mehr überschreiten. Es sind Anzeigemittel (SA) vorgesehen, welche diesen, den quasistabilen Zustand der Waage markierenden Zeitpunkt signalisieren. Diese Anzeigemittel (SA) zeigen während des Wägevorgangs zugleich den jeweils geltenden Toleranzbereich an. Die Einrichtung zur Stillstandskontrolle (ASD) enthält dazu Steuermittel, welche durch Verändern dieser Toleranzbereichanzeige, z.B. durch Dunkel- oder Hellsteuerung von den Toleranzbereichen einzeln zugeordneten Indikatoren, den Zeitpunkt des jeweiligen quasistabilen Stillstands der Waage signalisieren.

## Beschreibung

Die Erfindung betrifft eine elektronische Waage mit einer Einrichtung zur Stillstandskontrolle, welche Einrichtung den Zeitpunkt ermittelt, zu dem die Änderungen des Messwertes beim Einschwingen der Waage jeweils einen bestimmten von mehreren vorgegebenen Toleranzbereichen nicht mehr überschreiten, ferner mit Anzeigemitteln, welche diesen, den quasistabilen Stillstand der Waage markierenden Zeitpunkt signalisieren.

Bei bekannten Waagen dieser Art sind in einem Einstellmodus die Betriebsarten und die Betriebsparameter der Waage einstellbar, welche im Wägemodus der Waage den Ablauf des Wägevorgangs unter Berücksichtigung der Randbedingungen bestimmen. Unter anderem lässt sich im Einstellmodus aufgrund der Genauigkeitsbedürfnisse der Toleranzbereich festlegen, den die Schwankungen des zu erfassenden Wägeresultats nicht überschreiten sollen. Im allgemeinen wird bei jedem Einschwingen der Waage schliesslich der Zustand erreicht, in dem sich der Messwert nur noch innerhalb des bestimmten Toleranzbereichs ändert und diesen auch im Laufe einer bestimmten Wartezeit nicht mehr überschreitet. Erst in dem diese Wartezeit abschliessenden Zeitpunkt besteht die Gewähr, dass der Messwert mit der erforderlichen Genauigkeit erfasst wird und demzufolge abgelesen bzw. für eine allfällige Weiterverarbeitung freigegeben werden kann. Dieser Zeitpunkt, der den quasistabilen Stillstand der Waage markiert, wird in einer Einrichtung zur Stillstandskontrolle ermittelt und dem Waagenbenützer z.B. durch Erlöschen einer Anzeigelampe signalisiert. Das Leuchten dieser Anzeigelampe während eines Wägevorgangs zeigt andererseits an, dass der quasistabile Stillstand noch nicht erreicht ist.

Nachteilig bei der beschriebenen, an sich sehr nützlichen Wägehilfe ist in gewissen Anwendungsfällen der Umstand, dass der im Einstellmodus der Waage vorgewählte Toleranzbereich im Wägemodus jeweils nicht mehr zur Anzeige kommt, weil die betreffenden Anzeigemittel auch noch anderen Optionen zugeordnet sind und infolgedessen die Toleranzbereichsanzeige beim Verlassen des Einstellmodus der Waage verschwindet. Um diesen Nachteil zu vermeiden, wäre es zwar naheliegend, eigens für die Anzeige des Toleranzbereichs bestimmte Anzeigemittel vorzusehen, deren Anzeige beim Umschalten vom Einstellmodus zum Wägemodus der Waage stehen bleibt. Eine solche Lösung würde jedoch zusätzlichen Platz im Anzeigefeld der Waage beanspruchen und dem allgemeinen Bestreben zuwiderlaufen, eine möglichst einfache Gesamtdarstellung aller für die Erfassung eines Wägeresultats erforderlichen Daten zu erreichen.

Ein anderes Problem stellen Wägeprogramme mit häufigem Wechsel der Genauigkeitsansprüche dar. Ein fortlaufendes Anpassen des Toleranzbereichs erweist sich unter den vorliegenden Verhältnissen als ziemlich umständlich, weil dazu jeweils der Wägemodus verlassen und im Einstellmodus über ein Konfigurationsregister die Wahl eines anderen Toleranzbereichs eingeleitet werden muss. Wegen dieser Umständlichkeit unterbleibt deshalb oftmals diese an sich notwendige Anpassung. Das Unterlassen derselben kann jedoch zur Folge haben, dass der Waagenbenützer gelegentlich unnötig lange Wartezeiten bis zur Erfassung des Wägeresultats in Kauf nimmt oder das Wägeresultat mit verminderter Genauigkeit zu früh erfasst.

Die Erfindung bezweckt, die Waage der eingangs genannten Art dahingehend zu verbessern, dass die beschriebenen Nachteile vermieden werden, und zudem die Möglichkeit zu schaffen, dass der Waagenbenützer während der Wägung darüber informiert ist, in welchem Toleranzbereich sich das Wägeresultat befindet, ohne dass er zur Erlangung dieser Information den Wägemodus der Waage verlassen muss.

Die Lösung dieser Aufgabe besteht erfindungsgemäss darin, dass Anzeigemittel vorgesehen sind, welche den jeweils geltenden Toleranzbereich während des Wägevorgangs anzeigen, und dass die Einrichtung zur Stillstandskontrolle Steuermittel enthält, welche durch Verändern dieser Anzeige den Zeitpunkt des jeweiligen quasistabilen Stillstands der Waage signalisieren.

Erst wenn sich mit dem Wägeprogramm auch der Genauigkeitsanspruch ändert, ist gegebenenfalls eine Umschaltung in den Einstellmodus der Waage zur Änderung des Toleranzbereichs notwendig. Ferner wird durch die erfindungsgemässe Kombination der Toleranzbereichsanzeige mit der Stillstandsanzeige ein grösserer Platzanspruch für die Anzeigemittel vermieden und ausserdem die Handhabung der Waage vereinfacht und die Erfassung des Wägeresultats erleichtert.

Als Anzeigemittel können z.B. mehrere optische Indikatoren in einer Gruppe vorgesehen sein, welche durch die Steuermittel einzeln oder gruppenweise aktivierbar sind, wobei die Stellung eines Indikators in der Gruppe den jeweiligen Toleranzbereich anzeigt und das Aufleuchten oder das Erlöschen eines Indikators den quasistabilen Stillstand der Waage innerhalb des diesem Indikator zugeordneten Toleranzbereichs signalisiert. Die Indikatoren können z.B. ringförmig ausgebildet und in konzentrischen Kreisen angeordnet sein.

Eine andere Ausführungsform der Anzeigemittel kann darin bestehen, einen Indikator mit durch die Steuermittel wahlweise aktivierbaren Leuchtziffern zur Anzeige des jeweiligen Toleranzbereichs vorzusehen, wobei das Aufleuchten oder das Erlöschen einer Ziffer den quasistabilen Stillstand der Waage in dem durch diese Ziffer im aktivierten Zustand angezeigten Toleranzbereich signalisiert.

Eine Weiterbildung der Erfindung besteht darin, dass die Einrichtung zur Stillstandskontrolle Steuermittel enthält, welche eine selbsttätige Umschaltung der vorgegebenen Toleranzbereiche in Abhängigkeit von der Einschwingamplitude des Messwertes bewirken, und zwar derart, dass beim Erreichen des quasistabilen Stillstands der Waage innerhalb eines Toleranzbereichs jeweils auf den nächst kleineren Toleranzbereich umgeschaltet wird. Der Wechsel der verschiedenen Toleranzbereiche wird auf diese Weise laufend angezeigt. Diese Waagenbetriebsart, bei welcher auf eine Vorwahl des Toleranzbereichs verzichtet wird, ermöglicht es dem Benützer der Waage, bei jeder Einzelwägung jeweils die vom Messwert durchlaufenen Toleranzbereiche beim Einschwingen der Waage zu erfassen und das Messresultat jeweils dann abzulesen, wenn der quasistabile Stillstand der Waage in dem für die betreffende Wägung massgebenden Toleranzbereich durch die Bereichsumschaltung signalisiert wird.

Im weiteren können die genannten Steuermittel so ausgebildet sein, dass beim Verlassen des quasistabilen Stillstands der Waage innerhalb eines Toleranzbereichs jeweils auf den nächst grösseren Toleranzbereich umgeschaltet wird. In diesem Fall reagieren die Steuermittel also auch auf äussere Einflüsse, welche das quasistabile Gleichgewicht der Waage stören. Dadurch wird im Laufe eines Wägevorgangs stets jener Toleranzbereich zur Anzeige gebracht, in welchem sich die Messwertamplitude gerade bewegt.

Die Verwendung einer gemeinsamen Anzeigevorrichtung zur Anzeige des Toleranzbereichs und zur Signalisierung des quasistabilen Stillstands der Waage führt im Falle von optischen Indikatoren, welche entweder leuchten oder dunkel sind, zu zwei möglichen Lösungen hinsichtlich der Stillstandsanzeige, indem die Indikatoren entweder im dynamischen Bereich des Wägevorgangs leuchten und beim Übergang in den stabilen Bereich dunkel werden oder im dynamischen Bereich dunkel sind und beim Übergang in den stabilen Bereich aufleuchten. Die Anzeige des Toleranzbereichs im Wägemodus erfolgt also jeweils nur entweder während des Einschwingens oder im quasistabilen Stillstand der Waage. Welcher dieser beiden Lösungen der Vorzug gegeben wird, d.h. welcher Anzeigemodus angewandt wird, hängt von weiteren Faktoren ab, z.B. davon, ob mit einer einstufigen Stillstandsanzeige oder mit einer mehrstufigen Stillstandsanzeige zur Visualisierung des Stabilisierungsvorgangs gearbeitet wird. Im Falle einer einstufigen Stillstandsanzeige wird der Toleranzbereich voreingestellt, und die Stillstandsanzeige ist bei jeder Wägung ein einmaliger Vorgang. Ob die Anzeige beim Übergang der Waage in den quasistabilen Übergang erlischt oder aufleuchtet, ist hier nicht besonders kritisch, d.h. man wird den bisher gewohnten Anzeigemodus beibehalten. Bei der mehrstufigen Stillstandsanzeige wird auf eine Voreinstellung des Toleranzbereichs verzichtet, so dass während des Einschwingens der Waage die den einzelnen Toleranzbereichen zugeordneten Indikatoren nacheinander zur Wirkung kommen und auf diese Weise laufend anzeigen, in welchem der immer enger werdenden Toleranzbereiche der quasistabile Stillstand der Waage jeweils erreicht worden ist. In diesem Fall erscheint der Anzeigemodus günstiger, bei welchem der quasistabile Stillstand jeweils durch Aufleuchten des Indikators angezeigt wird.

In der Zeichnung sind Ausführungsbeispiele der Erfindung schematisch dargestellt, und zwar zeigen:
- Fig. 1: ein Blockschaltbild der elektronischen Waage mit der erfindungsgemässen Einrichtung zur Stillstandskontrolle;
- Fig. 2: Anzeigemittel mit optischen Indikatoren;
- Fig. 3: Anzeigemittel mit Leuchtziffern;
- Fig. 4: Schaltungsschema eines automatischen Stabilitätsdetektors für die einstufige Stillstandsanzeige;
- Fig. 5: Schaltungsschema eines automatischen Stabilitätsdetektors für die mehrstufige Stillstandsanzeige; und
- Fig. 6 und 7: zwei verschiedene Anzeigemoden bei der mehrstufigen Stillstandsanzeige.

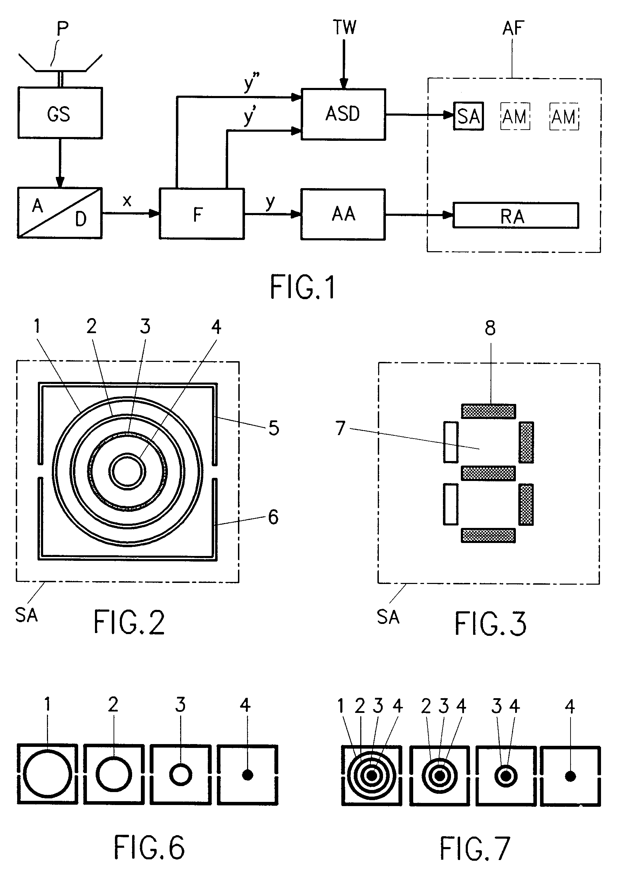

Die Waage nach Fig. 1 umfasst einen Gewichtssensor GS, welchem der Rohwert x des gemessenen Gewichts über einen A/D-Wandler entnommen wird. In einem digitalen Filter F, z.B. 2. oder 4. Ordnung, werden der Gewichtswert y und die erste und zweite Ableitung y' bzw. y'' desselben gebildet. Der Gewichtswert y gelangt über eine Einrichtung AA zur Anzeigeaufbereitung an die Resultatsanzeige RA im Anzeigefeld AF. Die den Ableitungen y' und y'' entsprechenden Signale werden einem automatischen Stabilitätsdetektor ASD zugeführt, in welchem diese Signale mit den vorgegebenen Toleranzwerten TW in Beziehung gebracht werden. Dabei ermittelt der Stabilitätsdetektor ASD den Zeitpunkt, zu dem die Änderungen des Messwertes y beim Einschwingen der Waage jeweils einen bestimmten von mehreren vorgegebenen Toleranzbereichen nicht mehr überschreitet. Der Stabilitätsdetektor ASD signalisiert diesen Zeitpunkt durch Dunkel- oder Hellsteuerung eines optischen Indikators in einer im Anzeigefeld angeordneten Stillstandsanzeige SA. Im Anzeigefeld AF befinden sich in der Regel noch weitere Anzeigemittel AM für andere Wägeparameter. Darauf wird aber hier nicht näher eingegangen.

In einer bevorzugten Ausführungsform der Erfindung bestehen die Anzeigemittel der Stillstandsanzeige SA gemäss Fig. 2 aus mehreren optischen Indikatoren 1, 2, 3 und 4, welche ringförmig ausgebildet und in konzentrischen Kreisen angeordnet sind. Jedem dieser ringförmigen Indikatoren ist ein Toleranzbereich zugeordnet, wobei - ähnlich wie bei einer Schiesscheibe - der grösste Ring 1 den grössten Toleranzbereich bzw. die grösste zugelassene Streuung des Messwerts und der kleinste Ring 4 den kleinsten Toleranzbereich bzw. die kleinste zugelassene Streuung des Messwerts markiert. Umgeben sind diese Indikatoren von einem aus zwei Teilen 5 und 6 gebildeten quadratischen Rahmen, welcher im Betrieb der Waage dauernd leuchtet und die Unterscheidung einzeln aktivierter Indikatoren durch Vergleich mit der Rahmengrösse erleichtern soll.

Als Anzeigemittel für die Stillstandsanzeige SA kann gemäss Fig. 3 auch ein Indikator 7 mit wahlweise ansteuerbaren Leuchtziffern 8 vorgesehen sein. Die Mittel für die Ansteuerung dieses Indikators 7 bleiben sich im wesentlichen gleich wie bei der Anordnung nach Fig. 2.

Bei der einstufigen Stillstandsanzeige wird der gewünschte Toleranzbereich im Einstellmodus der Waage voreingestellt, wobei der diesem Toleranzbereich zugeordnete Indikator der Indikatoren 1 bis 4 hellgesteuert wird. Je nach dem gewählten Anzeigemodus bleibt diese Anzeige bei der Umschaltung der Waage in den Wägemodus bestehen oder erlischt. Dementsprechend wird das Erreichen des quasistabilen Zustands der Waage innerhalb des diesem Indikator zugeordneten Toleranzbereichs durch Dunkel- bzw. Hellsteuerung dieses Indikators signalisiert. Die Anzeige des benutzten Toleranzbereichs erfolgt also jedenfalls auch im Wägemodus der Waage, und zwar entweder während des Einschwingens der Waage oder während der Stillstandsphase derselben.

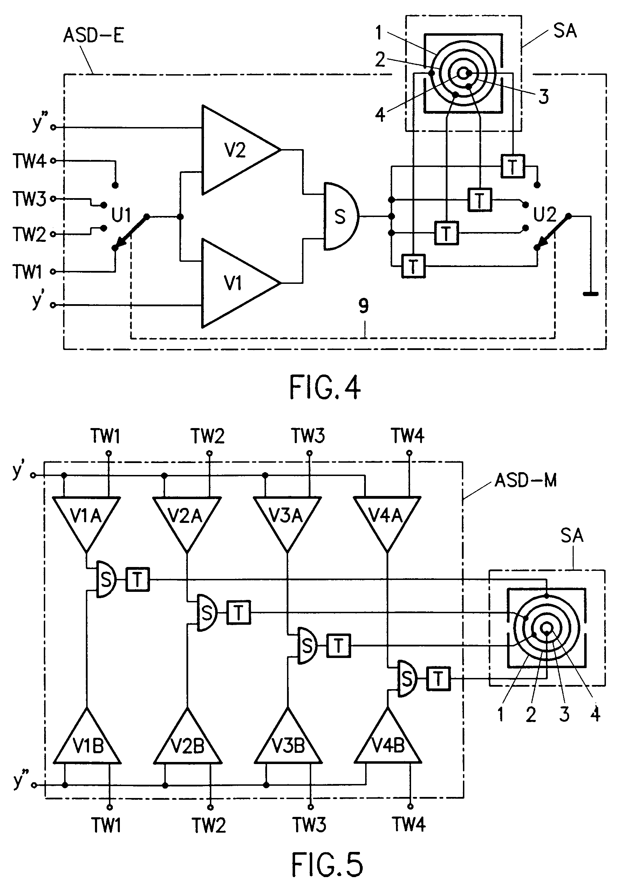

Der grundsätzliche Aufbau eines automatischen Stabilitätsdetektors ASD-E für die einstufige Stillstandsanzeige geht aus Fig. 4 hervor. Mit einem Umschalter U1 wird derjenige Toleranzwert der Toleranzwerte TW1 bis TW4 vorgewählt, welcher für die beabsichtigte Wägung massgebend sein soll. Es sei angenommen, dass TW1 den grössten und TW4 den kleinsten Toleranzbereich definiert. Der eingestellte Toleranzwert, im vorliegenden Beispiel TW1, gelangt an zwei Vergleichsstufen V1 und V2, z.B. in Form von Mikroprozessoren. Die Ableitungen y' und y'' des sich einschwingenden Gewichtswertes y werden den Vergleichsstufen V1 bzw. V2 einzeln zugeführt und in dieser mit dem Toleranzwert TW1 verglichen. Sobald die den Ableitungen y' und y'' entsprechenden Eingangssignale den eingestellten Toleranzwert TW1 unterschreiten, liefert die betreffende Vergleichsstufe V1 bzw. V2 ein Ausgangssignal. Die Ausgänge der Vergleichsstufen V1 und V2 sind mit einem Summenglied S verbunden, an dessen Ausgang ein Signal auftritt, wenn an beiden Vergleichsstufen V1 und V2 gleichzeitig ein Ausgangssignal vorliegt. Das Ausgangssignal des Summenglieds S dient zur Ansteuerung der Treiberstufen T, welche den Indikatoren 1 bis 4 der Stillstandsanzeige SA einzeln zugeordnet sind. Die Zuschaltung der einem bestimmten Indikator zugeordneten Treiberstufe T erfolgt durch einen Umschalter U2, welcher mit dem Umschalter U1 über die Verbindung 9 gekoppelt ist. Auf diese Weise wird im vorliegenden Beispiel im Falle eines quasistabilen Stillstands der Waage in dem durch den Toleranzwert TW1 definierten Toleranzbereich der Indikator 1 dunkel- bzw. hellgesteuert. Wie ersichtlich, handelt es sich bei dem Indikator 1 um denjenigen mit dem grössten Durchmesser, entsprechend dem eingestellten grössten Toleranzwert. Die elektronischen Mittel zur Signalverarbeitung in der beschriebenen Art sind an sich bekannt und hier nicht im einzelnen dargelegt.

Bei der mehrstufigen Stillstandsanzeige wird auf eine Voreinstellung eines bestimmten Toleranzbereichs verzichtet, und die Anzeige des jeweils geltenden Toleranzbereichs erfolgt lediglich während eines Wägevorgangs, also im Wägemodus der Waage. Während des Einschwingens der Waage kommen die den einzelnen Toleranzbereichen zugeordneten Indikatoren nacheinander zur Wirkung und zeigen an, in welchem der immer enger werdenden Toleranzbereiche der quasistabile Stillstand der Waage jeweils erreicht worden ist.

Der automatische Stabilitätsdetektor ASD-M nach Fig. 5 für eine mehrstufige Stillstandsanzeige enthält im Vergleich zu Fig. 4 für jeden Toleranzwert TW1 bis TW4 eine Anordnung mit zwei Vergleichsstufen V1A, V1B; V2A, V2B; V3A, V3B bzw. V4A, V4B, einem Summenglied S und einer Treiberstufe T für den jeweiligen Indikator 1, 2, 3 bzw. 4 der Stillstandsanzeige SA. Dabei wird das zu überwachende Signal y' den Vergleichsstufen V1A, V2A, V3A und V4A und das zu überwachende Signal y'' den Vergleichsstufen V1B, V2B, V3B und V4B zugeführt. Im übrigen arbeitet dieser Stabilitätsdetektor in ähnlicher Weise wie derjenige nach Fig. 4, mit dem Unterschied, dass die Indikatoren 1 bis 4 beim Abklingen der Messwertamplitude nacheinander jeweils dann angesteuert werden, wenn der quasistabile Stillstand der Waage in dem betreffenden Toleranzbereich erreicht wird.

Die Fig. 6 und 7 zeigen zwei mögliche Varianten für die fortlaufende Anzeige der beim Abklingen der Messwertamplitude durchlaufenen Toleranzbereiche und der damit verbundenen Stillstandsanzeigen.

Gemäss Fig. 6 wird die Stillstandsanzeige SA so gesteuert, dass beim Erreichen des quasistabilen Stillstands innerhalb des grössten vorgegebenen Toleranzbereichs der Indikator 1 mit dem grössten Ringdurchmesser aufleuchtet und jeweils beim Erreichen des quasistabilen Stillstands innerhalb des nächst kleineren Toleranzbereichs der jeweils vorher aktive Indikator erlischt und der Indikator 2, 3 bzw. 4 mit dem nächst kleineren Ringdurchmesser aufleuchtet. Der Indikator 4 mit dem kleinsten Ringdurchmesser erscheint hier als Punkt.

Im Gegensatz dazu kann die Stillstandsanzeige SA gemäss Fig. 7 auch so gesteuert werden, dass beim Erreichen des quasistabilen Stillstands innerhalb des grössten vorgegebenen Toleranzbereichs zunächst alle Indikatoren 1 bis 4 aufleuchten und danach jeweils der äusserste Ring verschwindet, sobald der quasistabile Stillstand im nächst kleineren Toleranzbereich erreicht ist.

In jedem Fall erfolgt mit der Stillstandsanzeige zugleich die Anzeige des Toleranzbereichs, für welchen der quasistabile Stillstand der Waage signalisiert wird.

Schliesslich können die Steuermittel für die Einrichtung zur Stillstandskontrolle derart weitergebildet sein, dass beim Nichterreichen des quasistabilen Stillstands der Waage innerhalb eines Toleranzbereichs jeweils auf den nächst grösseren Toleranzbereich umgeschaltet wird. Es wird dadurch bei einer laufenden Anzeige des Toleranzbereichs, in welchem sich die Messwertamplitude gerade bewegt, für den Benützer der Waage bzw. für gegebenenfalls vorhandene Einrichtungen zur Messwerterfassung erkennbar, dass der Wägevorgang durch äussere, die Schwingungen der Waage wieder verstärkende Einflüsse gestört worden ist. Eine vorzeitige Erfassung des Messwerts lässt sich auf diese Weise mit grösserer Sicherheit vermeiden.

Die weiteren Steuermittel zur Umschaltung der angezeigten Toleranzbereiche im aufsteigenden oder absteigenden Sinne bestehen im wesentlichen aus Schaltstufen, welche das Vorhandensein eines Ausgangssignal an den Summengliedern S des automatischen Stabilitätsdetektors ASD-M erfassen und eine Änderung des Signalzustandes in eine Schaltfunktion zur Ein- oder Ausschaltung der betreffenden Treiberstufe T umsetzen.

## Patentansprüche

1. Elektronische Waage mit einer Einrichtung zur Stillstandskontrolle, welche Einrichtung den Zeitpunkt ermittelt, zu dem die Änderungen des Messwertes beim Einschwingen der Waage jeweils einen bestimmten von mehreren vorgegebenen Toleranzbereichen nicht mehr überschreiten, ferner mit Anzeigemitteln, welche diesen, den quasistabilen Stillstand der Waage markierenden Zeitpunkt signalisieren, dadurch gekennzeichnet, dass Anzeigemittel (SA) vorgesehen sind, welche den jeweils geltenden Toleranzbereich während des Wägevorgangs anzeigen, und dass die Einrichtung zur Stillstandskontrolle (ASD) Steuermittel enthält, welche durch Verändern dieser Anzeige den Zeitpunkt des jeweiligen quasistabilen Stillstands der Waage signalisieren.

2. Elektronische Waage nach Anspruch 1, dadurch gekennzeichnet, dass als Anzeigemittel mehrere optische Indikatoren (1 bis 4) in einer Gruppe vorgesehen sind, welche durch die Steuermittel einzeln oder gruppenweise aktivierbar sind, wobei die Stellung eines Indikators in der Gruppe den jeweiligen Toleranzbereich anzeigt und das Aufleuchten oder das Erlöschen eines Indikators den quasistabilen Stillstand der Waage innerhalb des diesem Indikator zugeordneten Toleranzbereichs signalisiert.

3. Elektronische Waage nach Anspruch 2, dadurch gekennzeichnet, dass die Indikatoren (1 bis 4) ringförmig ausgebildet und in konzentrischen Kreisen angeordnet sind.

4. Elektronische Waage nach Anspruch 1, dadurch gekennzeichnet, dass als Anzeigemittel ein Indikator (7) mit durch die Steuermittel wahlweise aktivierbaren Leuchtziffern (8) zur Anzeige des jeweiligen Toleranzbereichs vorgesehen ist, wobei das Aufleuchten oder das Erlöschen einer Ziffer den quasistabilen Stillstand der Waage in dem dieser Ziffer zugeordneten Toleranzbereich signalisiert.

5. Elektronische Waage nach Anspruch 1, dadurch gekennzeichnet, dass die Einrichtung zur Stillstandskontrolle (ASD-M) Steuermittel enthält, welche eine selbsttätige Umschaltung der vorgegebenen Toleranzbereiche (TW1 bis TW4) in Abhängigkeit von der Einschwingamplitude des Messwerts bewirken, und zwar derart, dass beim Erreichen des quasistabilen Stillstands der Waage innerhalb eines Toleranzbereichs jeweils auf den nächst kleineren Toleranzbereich umgeschaltet wird.

6. Elektronische Waage nach Anspruch 5, dadurch gekennzeichnet, dass die Steuermittel so ausgebildet sind, dass beim Verlassen des quasistabilen Stillstands der Waage innerhalb eines Toleranzbereichs jeweils auf den nächst grösseren Toleranzbereich umgeschaltet wird.
